Europäisches Patentamt

European Patent Office

Office européen des brevets

(19)

(11) Publication number: **0 178 120**
**B1**

## EUROPEAN PATENT SPECIFICATION

(45) Date of publication of patent specification: 27.07.88

(51) Int. Cl.⁴: **B 05 B 7/14,** B 65 G 53/66

(21) Application number: 85307054.8

(22) Date of filing: 02.10.85

(54) Venturi powder pump.

(30) Priority: 12.10.84 US 660388

(43) Date of publication of application:
16.04.86 Bulletin 86/16

(45) Publication of the grant of the patent:
27.07.88 Bulletin 88/30

(84) Designated Contracting States:
CH DE FR GB LI SE

(56) References cited:
DE-A-2 101 123
FR-A-2 343 513
GB-A-1 521 800

(73) Proprietor: NORDSON CORPORATION
555 Jackson Street P. O. Box 151
Amherst Ohio 44001 (US)

(72) Inventor: Sharpless, John
11643 Vermilion Road, R.D. 2
Oberlin Ohio (US)

(74) Representative: Allen, Oliver John Richard et al
Lloyd Wise, Tregear & Co. Norman House
105-109 Strand
London, WC2R 0AE (GB)

Courier Press, Leamington Spa, England.

## Description

This invention relates to powder pumps for pumping solid particulate powder material to powder spray guns. More particularly, this invention relates an improved powder pump for pumping an even flow of powder from a powder source to a powder spray gun or dispenser.

Characteristically, powder pumps comprise a pneumatic conveyor line within which there is a low pressure venturi pumping chamber. This chamber is intersected by a powder supply passage through which powder is supplied from a fluidized bed or from a hopper. In order to meter or control the rate of flow of powder from the powder source into the venturi pumping chamber, such pumps conventionally include a metering air flow passage operable to inject a controlled flow of air into the powder supply passage. The pressure of this metering air flow controls the amount of air which is mixed with the powder entering the pump. Consequently, if the metering air flow pressure is increased, the amount of air in the powder-air mixture is increased and therefore the net powder flow rate is decreased. Conversely, if the metering air flow pressure is decreased, the amount of air in the powder-air mixture is decreased and therefore the net flow rate of powder is increased. A typical prior art powder flow pump of this type is disclosed and described in our U.S. Patent No. 3,746,254.

In the device of U.S. Patent No. 3,746,254, metering air flow into the powder supply passage to the powder pump is directed through an annular orifice radially and generally perpendicular to the powder flow passage. In other prior art powder pumps the metering air flow is directed radially into the powder flow passage through radial slots in a diffuser. In either event, the pressure of the metering air flow supplied to the powder supply passage controls the rate of flow of powder into the pump.

One of the shortcomings of all powder spray systems including systems incorporating powder pumps of the type described hereinbelow is that the powder ejected from the spray gun of the system commonly flows unevenly from the gun. There are periodic puffs or clouds of powder ejected from the gun and periodic reductions in the density of powder ejected from the gun. Such periodic increases or decreases in powder density result in uneven application of powder to a target substrate to which the powder is applied. Consequently, such random changes in powder density are very undesirable.

There have been numerous attempts to minimise or reduce these random changes of powder density sprayed from a powder spray gun. Such attempts have taken the form of changes in the design of the powder spray gun, changes in the design and configuration or length of hose between the powder pump and the gun, etc. Most of these changes have improved the situation somewhat, but have not cured the problem.

It is an objective of this invention to provide an improved powder spray system wherein inadvertent or random changes in the flow rate of powder dispensed from a powder spray gun or dispenser of the system are minimised or eliminated.

One source of uneven flow of powder from a powder spray gun or dispenser of a powder spray system is the pump through which the powder is supplied to the gun. It is therefore an objective of this invention to provide an improved powder pump for maintaining an even flow of powder from a powder source to a dispenser of a powder spray system.

In accordance with one aspect of the invention a method of pumping solid particulate powder from a source of powder comprises supplying high pressure air to a pneumatic conveyor line having a low pressure venturi pumping chamber contained therein, providing powder to an inlet powder flow passage which intersects the venturi pumping chamber, drawing the powder through the powder flow passage into the venturi pumping chamber of the pump, supplying high pressure air to a metering air flow passage which intersects the powder flow passage at a location spaced from said venturi pumping chamber, characterised in that a metering air flow is directed into the powder flow passage at an acute angle to the powder flow passage and aimed in the direction of desired flow through the powder flow passage.

The method has the advantage that the metering air flow is injected into the powder supply passage of a powder pump at an angle aimed generally toward the venturi pumping chamber of the pump rather than radially and perpendicular to the powder flow passage of the pump as in the past. This metering air flow change of direction results in the metering air flow assisting flow of powder into the venturi pumping chamber rather than periodically inhibiting it.

It has been found that the prior art perpendicular injection of the metering air flow into the powder supply passage under some conditions impedes rather than assists powder flow into the venturi pumping chamber by directing air currents away from rather than toward the pumping chamber. For example, when metering air flow pressure is greater than conveyor lineair pressure this phenomenon has been found to occur.

In accordance with another aspect of the invention a powder pump for pumping solid particulate powder from a fluidised bed of powder, comprises a pneumatic conveyor line having a low pressure venturi pumping chamber contained therein, a powder flow passage intersecting the venturi pumping chamber and having an inlet for fluid communication with a source (e.g. a fluidised bed) of solid particulate material, metering means for controlling the quantity of air mixed with solid particulate powder flowing through the powder flow passage, the metering means comprising a metering air flow passage intersecting the powder flow passage at a location spaced

2

from the venturi pumping chamber, the metering air flow passage having an inlet for communication with a source of high pressure air characterised in that the metering air flow passage directs metering air flow into the powder flow passage through at least one port at an acute angle to the direction of powder flow through the powder flow passage.

By utilising these angled ports, any tendency for the metering air flow to impede rather than assist flow into the pumping chamber of the pump is eliminated since the occurence of the reverse air flow phenomenon in the powder supply passage is overcome. Additionally, injection of the metering air flow into the powder flow passage in a direction generally tangential to the passage, further assists in maintaining an even flow of powder into the venturi pumping chamber of the pump.

The powder pump preferably comprisies a conventional pneumatic conveyor line having a venturi pumping chamber contained therein. This pumping chamber is intersected by a powder supply passage within which there is located a novel diffuser. This diffuser has a central powder flow bore intersected by ports which extend from the periphery of the diffuser into the bore at an angle of approximately 45° to the axis of the central bore. These ports are directed toward the venturi pumping chamber of the pumps so that they assist powder flow in the chamber. In the preferred embodiment, these ports intersect the interior bore of the diffuser on a tangent with the bore so that the ports impart a tangential whirling action to metering air flow directed through the diffuser into the powder flow passage.

The invention will now be further described by way of example with reference to the accompanying drawings in which:-

Fig. 1 is a side elevation, partially in cross section, of a powder spray system incorporating a powder pump in accordance with this invention.

Fig. 2 is a cross-sectional view through the powder pump of Fig. 1.

Fig. 3 is an enlarged cross-sectional view of the diffuser of the powder pump of Fig. 1.

Fig. 4 is a top plan view of the diffuser of Fig. 3.

Fig. 5 is a cross-sectional view of a portion of a prior art powder pump.

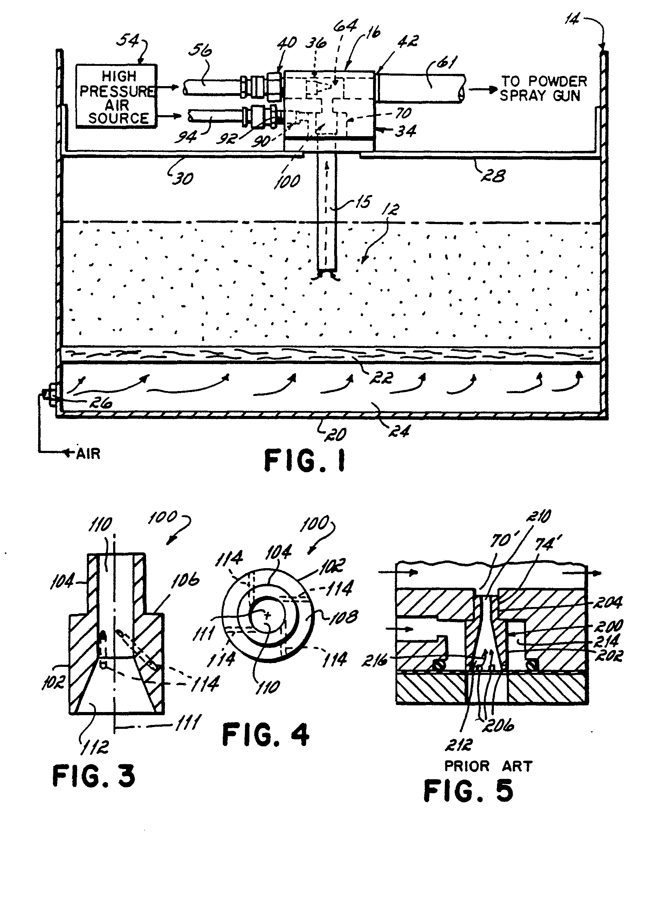

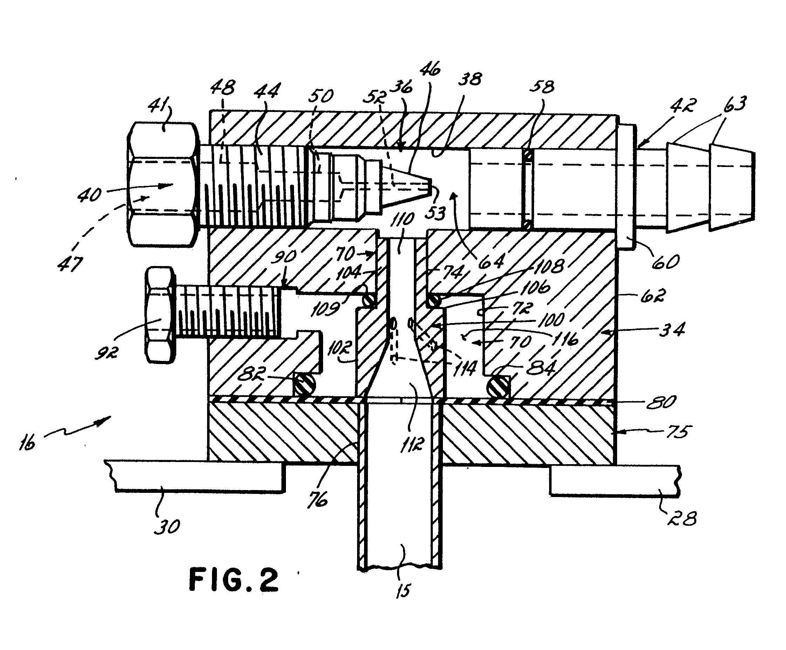

Referring first to Fig. 1 there is illustrated a powder spray system for transporting solid particulate powder 12 from a fluidized bed container 14 through a powder pump 16 to a powder spray gun (not shown). The fluidized bed container 14 comprises a conventional open top container having four side walls and a bottom wall 20. Spaced upwardly from the bottom wall there is an air pervious wall 22 which extends between the four side walls and is secured thereto. This air pervious wall, the parallel bottom wall 20, and the side walls define an air chamber 24 into which high pressure air is introduced from a source (not shown) through a side wall fitting 26. This high pressure air passes from the air chamber 24 upwardly through the pervious wall 22 to fluidize the powder 12 contained interiorly of the container 14.

The powder pump 16 is mounted within the container by a pair of support brackets 28, 30. A conduit or hose 15 extends downwardly from the pump into the container 14 and is operative to supply powder from the bed of fluidized powder 12 to the interior of the pump, as explained more fully hereinafter.

With reference now to Fig. 2, it will be seen that the powder pump 16 comprises a pump body 34 within which there is a pneumatic conveyor line 36. This conveyor line comprises a transverse bore 38 within which there is mounted an inlet nozzle 40 and an outlet fitting 42. Between the inlet nozzle 40 and outlet fitting 42, there is a low pressure venturi pumping chamber 64.

The nozzle 40 has a hexagonal head 41 at one end located externally of the pump body 34, and a generally tubular shaped section 44 which extends inwardly from the head 41 to a conically shaped discharge end 46 of the nozzle. The discharge end 46 of the nozzle is located within the venturi pumping chamber 64 of the pump. The nozzle 40 is mounted within the bore 38 by external threads of the nozzle being threaded into a matingly threaded section of the bore 38. Internally of the nozzle 40, there is an axial bore 47 which extends from a large diameter outer end section 48 through a smaller diameter middle section 50 to a very small diameter end discharge end section 52. The small diameter discharge end section 52 of the nozzle bore terminates in a discharge orifice 53 through which high velocity air is supplied to the interior of the pump. A high pressure source of air is connected via a conduit 56 to the inlet end 48 of the nozzle bore 47.

The outlet fitting 42 is mounted in the discharge end of the transverse bore 38. It comprises a conventional hose fitting sealingly secured within the transverse bore 38. An O-ring 58 is mounted on the periphery of the fitting so as to form a seal between the fitting and the bore 38. The fitting has a flange 60 which engages an end wall 62 of the pump body 34. Outwardly of the flange, the outlet fitting has tapered annual ribs 63 adapted to receive a discharge hose or conduit 61 through which powder is transported from the pump to a powder spray gun, or other powder dispenser.

In practice, high pressure air from the source 54 is directed through the nozzle 40 into the venturi pumping chamber 14 and subsequently through the outlet fitting 42. In the course of passage through the pneumatic conveyor line 38 the air flow lowers the pressure within the venturi pumping chamber 64 of the pneumatic conveyor line. As explained more fully hereinafter, the low air pressure in the venturi pumping chamber 64, functions to draw powder into the chamber.

Intersecting the transverse bore 38 there is a powder flow passage 70 which extends upwardly from the bottom of the pump body 34. This passage comprises a large diameter lower end section 72 and a smaller diameter upper end section 74. The bottom of the pump body 34 rests atop a support block 75 which in turn is supported from the brackets 28, 30. The support block has a bore 76 coaxially aligned with the axis of the powder flow passage 70. The hose or conduit 15 is fitted into the bore 76 and forms a continuation of it downwardly into the fluidized powder 12.

The supporting block 75 is preferably bolted to the underside of the pump body 34 by bolts (not shown). A seal or gasket 80 is sandwiched between the support block 74 and the pump body 34. Additionally, an O-ring 82 is located within an annular groove 84 formed in the bore 72 of the pump body.

The powder flow passage 70 is intersected by a metering air flow passage 90. This passage is threaded and receives an inlet air fitting 92. High pressure air from the source 54 is supplied to the inlet air fitting 92 via a hose or conduit 94. As explained more fully hereinafter, high pressure air supplied through the metering air flow passage 90 into the powder flow passage controls the amount of air mixed with the powder flowing to the venturi pumping chamber of the pump. As the pressure in the line 90 is increased, the flow of powder from the bed 12 into the venturi pumping chamber is decreased as a consequence of additional air being added in relation to the powder. Correspondingly, as the pressure in line 90 is decreased, powder flow is increased in that there is proportionately more powder in the air-powder flow.

Contained internally of the powder flow passage 70 there is a powder diffuser 100. This diffuser is generally tubular in configuration and comprises a large diameter lower end section 102 and a smaller diameter upper end section 104. Between the two sections 102, 104 there is a shoulder 106.

The external diameter of the upper end section 104 of the diffuser is approximately the same diameter as the bore 74 in the upper end of the powder flow passage 70 and is mounted therein. An O-ring seal 108 surrounds the upper end of the diffuser 104 and is sandwiched between the shoulder 106 of the diffuser and a shoulder 109 of the powder flow passage 70. This O-ring is resilient and spring biases diffuser 102 downwardly as viewed in Figure 2 to insure that the bottom of the diffuser is sealed against the gasket 80. Alternatively, the diffuser may be sized so as to bear against the gasket 80 or may be threaded with the bore 74 so as to achieve the same seal between the bottom of the diffuser and the gasket 80. The diffuser 100 has an axial bore 110 extending therethrough. The lower end of this bore 110 tapers outwardly to form an entrance throat 112 for powder entering the diffuser from the fluidized bed of powder 12 via the hose or conduit 15.

The fluidized bed container 14, as well as the pump 16 heretofore described, except for the diffuser 100, is conventional and known in the prior art. With reference to Fig. 5 there is illustrated a diffuser 200 which is also known in the prior art. This diffuser has a large diameter lower end section 202 and a smaller diameter upper end section 204 received within the small diameter upper end section 74' of the powder flow passage 70'. The diffuser 202 also has an axial bore 210 extending therethrough and a tapered entrance throat 212 in this bore. The lower end of this prior art diffuser 200 has a plurality of slots 206 formed therein through which metering air from a high pressure air source may enter the throat 212 of the diffuser from an annular air chamber 214 which surrounds the diffuser. This high pressure air flows radially inwardly through the slots 206 into the powder flow bore 210 contained internally of the diffuser. Generally, this radially directed metering air flow is pulled upwardly, as indicated by the arrows 216, into the low pressure venturi pumping chamber of the pump. However, the metering air flow passing through these slots 216 apparently does not always turn and flow upwardly through the powder flow passage 210. Instead, that radially directed air flow appears to periodically change in direction and blow downwardly, thereby varying the rate of powder flow through the powder flow passage 210.

To eliminate these erratic and unpredictable air flow currents within the diffuser, the pump utilises angled ports 114 which extend generally at approximately a 45° angle to the axis 111 of the diffuser for injecting metering air flow into the diffuser (see Fig. 3). The bottom of the diffuser is closed by the support block 75 so that the only metering air flow which may enter the powder flow passage of the diffuser is through the ports 114 which extend between the annular air chamber 116 surrounding the diffuser 100 and the internal bore 110 of the diffuser.

With reference to Fig. 4 it will be seen that there are four such ports 114, all of which extend upwardly from the exterior to the interior of the diffuser at an angle of approximately 45° to the axis 111 of the diffuser, and each one of which intersects the internal bore 110 of the diffuser tangentially of the bore. Consequently, metering air flow entering the bore of the diffuser is caused to whirl upwardly thereby assisting in the transport of fluidised powder from the fluidised bed of powder 12 upwardly into the low pressure venturi pumping chamber 64.

In operation, high pressure air is supplied from a high pressure air source 54 into the pnuematic conveyor line 36 via the conduit 56. This high pressure air passes through the inlet nozzle 40, out the small diameter outlet orifice 53 thereof and into the venturi pumping chamber 64 of the pneumatic conveyor lire 36. From this venturi pumping chamber the air flows out of the pump via the outlet fitting 42 and a hose 61 to a powder spray gun. The low pressure created within the venturi pumping chamber results in powder being drawn upwardly from the fluidized bed of powder 12 through the diffuser 100 and powder flow passage 110 contained therein, and into the venturi pumping chamber 64. The greater the air pressure supplied to the nozzle 40, the greater is the quantity of powder drawn up from the fluidized bed into the pump. The quantity of powder air mixture which is supplied to the venturi chamber of the pump is regulated by metering air flow supplied to the pump from a high pressure air source via the conduit 94 and the metering inlet air flow passage 90. This metering air flow enters an annular chamber 116 surrounding the diffuser 100 and passes through the upwardly directed ports 114 into the powder flow passage cf the diffuser 10O. This upwardly directed air enters the powder flow passage 110 of the diffuser in an upwardly and tangential direction relative to that passage 110 so as to assist in transporting the powder upwardly into the venturi pumping chamber 64 from which the air entrained powder flows out of the pump via the outlet fitting 42 and conduit 64.

It has been found that the use of the ports 114 in the diffuser 100 rather than the prior art radial slots 206 illustrated in Figure 5 has the effect of eliminating reverse air flow towards the powder source from the metering air ports and the resulting erratic flow of powder from the pump which has heretofore occurred under some operating conditions as explained hereinabove. It results in a very even flow of powder from the pump to a powder spray gun. Such even flow is, of course, very desirable in order to apply an even coating of powder to a target substrate located forwardly of the discharge end of a conventional powder spray gun.

**Claims**

1. A powder pump for pumping solid particulate powder from a fluidised bed of powder, comprising a pneumatic conveyor line having a low pressure venturi pumping chamber contained therein, a powder flow passage intersecting the venturi pumping chamber, and having an inlet for fluid communication with a source (e.g. a fluidised bed) of solid particulate material, metering means for controlling the quantity of air mixed with solid particulate powder flowing through the powder flow passage, the metering means comprising a metering air flow passage intersecting the powder flow passage at a location spaced from the venturi pumping chamber, the metering air flow passage having an inlet for communication with a source of high pressure air characterised in that the metering air flow passage (90) directs metering air flow into the powder flow passage (70) through at least one port (114) at an acute angle to the direction of powder flow through the powder flow passage.

2. A powder pump as claimed in Claim 1 in which the port (114) is angled toward the venturi pumping chamber (64).

3. A powder pump as claimed in either Claim 1 or 2 wherein the powder flow passage is circular in cross-section and said ports (114) are operative to direct metering air flow tangentially into the powder flow passage.

4. A powder pump as claimed in any preceding claim wherein the powder flow passage (70) has an air flow diffuser (100) mounted therein, the diffuser having an axial bore (110) extending therethrough, the metering air flow port (114) being located within the diffuser and directed at an acute angle to the axis of the diffuser bore (110).

5. A powder pump as claimed in Claim 4 wherein the diffuser (100) is generally tubular in cross-section and the bore (110) is intersected by the metering air flow ports (114) which extend from the outside surface of the tubular diffuser (100) into the bore (110), the ports (114) being directed towards the discharge end of the bore (110).

6. A powder pump as claimed in Claim 5 wherein the bore (110) is generally circular in cross-section and the metering air flow ports (114) of the diffuser intersect the bore tangentially thereof.

7. A method of pumping solid particulate powder from a source of powder comprising supplying high pressure air to pneumatic conveyor line having a low pressure venturi pumping chamber contained therein, providing powder to an inlet powder flow passage which intersects the venturi pumping chamber, drawing the powder through the powder flow passage into the venturi pumping chamber of the pump, supplying high pressure air to a metering air flow passage which intersects the powder flow passage at a location spaced from said venturi pumping chamber, characterised in that a meteing air flow is directed into the powder flow passage at an acute angle to the powder flow passage and aimed in the direction of desired flow through the powder flow passage.

**Patentansprüche**

1. Pulverpumpe, um aus Feststoffteilchen bestehendes Pulver aus einem Pulverwirbelbett abzuziehen, umfassend eine pneumatische Förderleitung mit einer darin vorgesehenen Niederdruckventuripumpkammer, einen Pulverstromkanal, der mit der Venturipumpkammer in Verbindung steht und einen Eintritt zwecks Medienverbindung mit einer Quelle (zum Beispiel ein Wirbelbett) aus Feststoffteilchen umfaßt, Dosiervorrichtungen zur Regelung der Luftmenge, die, mit démaus Feststoffteilchen bestehenden Pulver vermischt, durch den Pulverstromkanal strömt, wobei die Dosiervorrichtungen einen Dosierluftstromkanal umfassen, der mit dem Pulverstromkanal mit Abstand zur Venturipumpkammer in Verbindung steht, wobei der Dosierluftstromkanal einen Eintritt zwecks Verbindung mit einer Hochdruckluftquelle aufweist, dadurch gekennzeichnet, daß der Dosierluftstromkanal (90) einen Dosierluftstrom in den Pulverstromkanal (70) durch zumindest eine Durchgangsöffnung (114) in einem spitzen Winkel zur Richtung des Pulverstroms durch den Pulverstromkanal einleitet.

2. Pulverpumpe gemäß Anspruch 1, wobei die Durchgangsöffnung (114) in Richtung auf die Venturipumpkammer (64) abgewinkelt angeordnet ist.

3. Pulverpumpe gemäß Anspruch 1 oder 2, wobei der Pulverstromkanal einen kreisförmigen Querschnitt aufweist und die genannten Durchgangsöffnungen (114) dazu dienen, den Dosierluftstrom tangential in den Pulverstromkanal einzuleiten.

4. Pulverpumpe gemäß irgendeinem der vorstehenden Ansprüche, wobei der Pulverstromkanal (70) einen darin montierten Luftstromverteiler (100) aufweist, wobei der Verteiler eine durchgehende Axialbohrung (110) aufweist, wobei die Dosierluftstrom-Durchgangsöffnung (114) innerhalb des Verteilers und in spitzem Winkel zur Achse der Verteilerbohrung (110) angeordnet ist.

5. Pulverpumpe gemäß Anspruch 4, wobei der Verteiler (100) einen im allgemeinen rohrförmigen Querschnitt aufweist, und wobei die Bohrung (110) mit den Dosierluftstrom Durchgangsöffnungen (114) in Verbindung steht, die sich von der Außenfläche des rohrförmigen Verteilers (100) in die Bohrung (110) hinein erstrecken, wobei die Durchgangsöffnungen (114) in Richtung auf das Austrittsende der Bohrung (110) verlaufen.

6. Pulverpumpe gemäß Anspruch 5, wobei die Bohrung (110) einen im allgemeinen kreisförmigen Querschnitt aufweist und die Dosierluftstrom-Durchgangsöffnungen (114) des Verteilers tangential dazu durch die Bohrung verlaufen.

7. Methode, um aus Feststoffteilchen bestehendes pulver aus einer Pulverquelle abzuziehen, umfassend die Zufuhr von Hochdruckluft über eine pneumatische Förderleitung mit einer darin enthaltenen Niederdruckventuripumpkammer, die Zurverfügungstellung von Pulver am Eintritt eines Pulverstromkanals, der mit der Venturipumpkammer in Verbindung steht, das Befördern des Pulvers durch den Pulverstromkanal in die Venturipumpkammer der Pumpe, die Zufuhr von Hochdruckluft in einen Dosierluftstromkanal, der mit dem Pulverstromkanal mit Abstand zur genannten Venturipumpkammer in Verbindung steht, dadurch gekennzeichnet, daß ein Dosierluftstrom in den Pulverstromkanal mit spitzem Winkel zum Pulverstromkanal und in gewünschter Strömungsrichtung durch den Pulverstromkanal geleitet wird.

## Revendications

1. Ejecteur à poudre pour pomper une poudre particulaire solide à partir d'un lit fluidisé de poudre, comprenant une ligne de transport pneumatique contenant une chambre de pompage à venturi à basse pression, un passage d'écoulement de la poudre coupant la chambre de pompage à venturi, et ayant une entrée pour assurer la communication fluide avec une source (par exemple un lit fluidisé) de matériau particulaire solide, des moyens de dosage pour régler la quantité d'air mélangé à la poudre particulaire solide s'écoulant à travers le passage d'écoulement de la poudre, les moyens de dosage comprenant un passage d'écoulement d'air de dosage coupant le passage d'écoulement de la poudre en un point distant de la chambre de pompage à venturi, le passage d'écoulement d'air de dosage ayant une entrée pour communiquer avec une source d'air à haute pression, caractérisé en ce que le passage d'écoulement d'air de dosage (90) dirige le courant d'air de dosage dans le passage d'écoulement de la poudre (70) à travers au moins un orifice (114) sous un angle aigu par rapport à la direction d'écoulement de la poudre à travers le passage d'écoulement de la poudre.

2. Ejecteur à poudre suivant la revendication 1, dans lequel l'orifice (114) est incliné d'un certain angle en direction de la chambre de pompage à venturi (64).

3. Ejecteur à poudre suivant l'une ou l'autre des revendications 1 et 2, dans lequel le passage d'écoulement de la poudre a une section transversale circulaire et en ce que lesdits orifices (114) servent à diriger l'écoulement d'air de dosage tangentiellement dans le passage d'écoulement de la poudre.

4. Ejecteur à poudre suivant l'une ou l'autre des revendications précédentes, dans lequel le passage d'écoulement de la poudre (70) comporte un diffuseur du courant d'air (100) incorporé, le diffuseur ayant un alésage axial (110) s'étendant à travers lui, l'orifice (114) pour le courant d'air de dosage étant situé à l'intérieur du diffuseur et étant dirigé sous un angle aigu vers l'axe de l'alésage (110) du diffuseur.

5. Ejecteur à poudre suivant la revendication 4, dans lequel le diffuseur (100) a une section transversale généralement tubulaire et où l'alésage (110) est coupé par les orifices (114) d'écoulement de l'air de dosage qui s'étendent à partir de la surface extérieure du diffuseur tubulaire (100) jusque dans l'alésage (110), les orifices (114) étant dirigés vers l'extrémité de sortie de l'alésage (110).

6. Ejecteur à poudre suivant la revendication 5, dans lequel l'alésage (110) a une section transversale généralement circulaire et où les orifices (114) d'écoulement d'air de dosage du diffuseur se raccordent tangentiellement à l'alésage.

7. Procédé pour pomper une poudre particulaire solide à partir d'une source de poudre, comprenant la fourniture d'air à haute pression à une ligne de transport pneumatique contenant une chambre de pompage à venturi à basse pression, la délivrance de poudre à une entrée d'un passage d'écoulement de poudre qui coupe la chambre de pompage à venturi, l'aspiration de poudre à travers le passage d'écoulement de poudre jusque dans la chambre de pompage à venturi de l'éjecteur, la fourniture d'air à haute pression à un passage d'écoulement d'air de dosage qui coupe le passage d'écoulement de la poudre en un point distant de ladite chambre de pompage à venturi, caractérisé en ce que l'on dirige un courant d'air de dosage dans le passage d'écoulement de la poudre sous un angle aigu par rapport au passage d'écoulement de la poudre et en ce qu'on l'oriente dans la direction d'écoulement désirée à travers le passage d'écoulement de la poudre.

FIG. 1

FIG. 3

FIG. 4

PRIOR ART
FIG. 5

FIG.2

0 178 120